# EUROPÄISCHE PATENTSCHRIFT

(11) **EP 2 835 163 B1**
(45) Veröffentlichungstag und Bekanntmachung des Hinweises auf die Patenterteilung: **12.10.2016**
(21) Anmeldenummer: 13179851.4
(22) Anmeldetag: 09.08.2013
(51) Int. Cl.: B01D 39/16

(54) **FILTERBEUTEL FÜR EINEN STAUBSAUGER SOWIE VERFAHREN ZUR ERMITTLUNG EINER UNMITTELBAR ANGESTRÖMTEN FLÄCHE EINES STAUBSAUGERFILTERBEUTELS**
FILTER BAG FOR A VACUUM CLEANER AND A METHOD FOR DETERMINING A SURFACE OF A VACUUM CLEANER DUST BAG WHICH IS DIRECTLY IMPACTED BY THE AIR FLOW
SAC FILTRANT POUR UN ASPIRATEUR ET PROCÉDÉ DE DÉTERMINATION D'UNE SURFACE D'UN SAC FILTRANT D'ASPIRATEUR DIRECTEMENT EN CONTACT AVEC LE FLUX

(43) Veröffentlichungstag der Anmeldung: 11.02.2015
(73) Patentinhaber: Eurofilters N.V., 3900 Overpelt (BE)
(72) Erfinder: Schultink, Jan, 3900 Overpelt (BE); Sauer, Ralf, 3900 Overpelt (BE)
(74) Vertreter: Pfenning, Meinig & Partner mbB

(56) Entgegenhaltungen:
- WO-A1-2007/068408
- WO-A2-2007/118640

## Beschreibung

Die vorliegende Erfindung betrifft einen Filterbeutel für einen Staubsauger, der aus einem Filtermaterial gebildet ist, das mindestens drei Filtermateriallagen umfasst. Dabei ist bei den Filtermateriallagen mindestens eine Lage ein Scrim und mindestens eine Lage eine Faservlieslage, die unverbundene Stapelfasern und/oder unverbundene Filamente umfasst. Der Filterbeutel umfasst zusätzlich eine Einlassöffnung, über die Luft in den Filterbeutel einströmen kann. Der Filterbeutel gemäß der vorliegenden Erfindung zeichnet sich dadurch aus, dass in einem Bereich des Filterbeutels, insbesondere dort wo der Luftstrom, der durch die Einlassöffnung in den Staubsaugerfilterbeutel eintritt unmittelbar auf das Filtermaterial auftrifft mindestens eine Verbindungsstelle vorhanden ist, bei der die mindestens eine Faservlieslage mit mindestens einer der mindestens zwei weiteren Lagen verbunden ist, so dass eine permanente Fixierung der Stapelfasern und/oder Filamente der Faservlieslage mit mindestens einer der mindestens zwei weiteren Lagen gewährleistet ist. Dieser Bereich macht dabei maximal 20 % der gesamten durchströmbaren Oberfläche des Filterbeutels aus. Der Pressflächenanteil dieser Verbindungsstelle, bezogen auf die Fläche beträgt dabei zwischen 0,1 und 40 %. In den übrigen Bereichen bzw. Flächen des Filterbeutels können ebenso Verbindungsstellen der unverbundenen Fasern bzw. Filamente vorhanden sein, diese Verbindungen sind dort allerdings optional. In jedem Fall ist der Pressflächenanteil der Verbindungsstellen in den übrigen Flächen somit geringer als in dem Bereich bzw. den Bereichen.

Staubsaugerfilterbeutel mit mehrlagigen Filtermaterialien, bei denen beispielsweise eine Lage der Filtermaterialien unverbundene Faservlieslagen aufweist, sind aus dem Stand der Technik, beispielsweise der EP 1 795 247 und der EP 1 960 084 bekannt. Jedes der Dokumenten WO 2007/068408 und WO2007/118640 offenbart einen Filterbeutel für einen Staubsauger, bei dem die Lagen des Filtermaterials über Schweißverbindungen miteinander verbunden sind. Hierbei wurde gefunden, dass die Staubsaugerfilterbeutel eine umso bessere Staubspeicherfähigkeit aufweisen, je weniger Schweißpunkte zur Verbindung der Lagen des Filtermaterials des Staubsaugerfilterbeutels vorhanden sind.

Nachteilig bei derartigen Filterbeuteln mit sehr wenigen Schweißpunkten ist allerdings, dass das Filtermaterial eine geringere mechanische Stabilität aufweist und somit bei den hohen Einströmgeschwindigkeiten des Luftstromes in dem Staubsaugerfilterbeutel beschädigt werden kann. Insbesondere im Auftreffbereich des Luftstromes bzw. der mit dem Luftstrom transportierten Partikel auf das Filtermaterial werden die unverbundenen Fasern der Faservlieslage, beispielsweise die losen Stapelfasern verschoben, dadurch wird die darunterliegende Filtermateriallage, beispielsweise die Feinfilterlage oder ein Scrim freigelegt.

Durch die fehlende Vorfilterfunktion verstopft dieses Filtermaterial dann schnell, oft wird es auch durch den Luft- bzw. Partikelstrom zerstört.

Bisher wurde eine derartige Problematik aus dem Stand der Technik dahingehend gelöst, dass Prallschutzeinrichtungen, wie beispielsweise Verstärkungseinlagen auf der Innenseite des Staubsaugerfilterbeutels angebracht wurden. Hierbei wurde eine meist großflächige Verklebung oder Verschweißung einer relativ starren und mechanisch stabilen Prallschutzeinrichtung mit der Innenseite des Bereichs, in dem die Luftströmung unmittelbar auf die Wandung des Filtermaterials auftrifft, vorgenommen. Dabei werden zum Beispiel gelochte oder ungelochte Folien, Vliesstoffe oder Papierstücke auf diesen Bereich aufgeklebt oder aufgeschweißt. Beispielsweise beschreibt die EP 1415 699 verschiedene Varianten solcher auf eine Teilfläche aufgebrachten Schutzstücke. In der EP 2 510 859 wird ein Materialstück mit einer entsprechenden Prallschutzfunktion beschrieben. Die DE 20 2004 019 344 beschreibt eine der Einlassöffnung gegenüberliegend angebrachte Verstärkungslage aus Schaumstoff oder Nonwoven-Kunststofffasermaterial. Die DE 20 2009 002 970 offenbart eine ähnliche Pralleinrichtung mit einer Prallfläche.

Dies bringt allerdings den Nachteil mit sich, dass im Bereich der Prallschutzeinrichtung die Luftdurchlässigkeit des Filtermaterials nicht mehr gegeben ist, so dass ein erhöhter Druckabfall im Staubsaugerfilterbeutel gegeben ist. Dadurch wird ebenso die Speicherfähigkeit des Filtermaterials stark herabgesetzt, so dass sich insgesamt die Performance des Filterbeutels spürbar verringert. Zudem erfolgt eine ungleichmäßige Verteilung der eintretenden Staubpartikel im Filterbeutel, was die Standzeit nachhaltig beeinträchtigt.

Ausgehend hiervon ist es Aufgabe der vorliegenden Erfindung, einen Staubsaugerfilterbeutel anzugeben, der eine hohe Staubspeicherkapazität, eine hohe Standzeit und einen geringen Druckverlust aufweist. Zudem ist es Aufgabe der vorliegenden Erfindung, ein Verfahren anzugeben, mit dem der Auftreffbereich eines in dem Staubsaugerfilterbeutel eintretenden Luftstroms (= unmittelbar angeströmte Fläche bzw. Bereich) auf das Filtermaterial genau bestimmt und ermittelt werden kann.

Diese Aufgabe wird hinsichtlich eines Filterbeutels mit den Merkmalen des Patentanspruchs 1, bezüglich eines Verfahrens zur Ermittlung des durch den durch die Einlassöffnung in das Innere des Filterbeutels eintretenden Luftstroms unmittelbar angeströmten Bereichs bzw. für den Fall, dass mehrere Bereiche vorhanden sind, der Bereiche mit den Merkmalen des Patentanspruchs 21 gelöst. Die abhängigen Patentansprüche stellen dabei vorteilhafte Weiterbildungen dar.

Gemäß der vorliegenden Erfindung wird somit ein Filterbeutel für einen Staubsauger angegeben, umfassend einen Beutel aus einem Filtermaterial, das mindestens drei Filtermateriallagen umfasst, von denen mindestens eine Lage eine Scrim und mindestens eine Lage eine Faservlieslage, enthaltend Stapelfasern und/oder Filamente, ist, sowie eine im Beutel angebrachte Einlassöffnung.

Erfindungsgemäß ist dabei vorgesehen, dass der komplette durchströmbare Bereich des Filtermaterials in zwei sich qualitativ unterscheidende Bereiche unterteilt ist. In einem Bereich, bzw. mehreren Bereichen, der bzw. die zusammen genommen maximal 20 % der durchströmbaren Oberfläche des Filterbeutels ausmacht bzw. ausmachen sowie ggf. einen zusätzlichen Bereich, der den zuvor angesprochenen Bereich unmittelbar umgibt, bzw. für den Fall, dass mehrere Bereiche vorhanden sind, mehrere zusätzliche Bereiche, die jeweils den Bereich X unmittelbar umgeben, sind dabei eine oder mehrere Verbindungsstellen des Filtermaterials vorhanden. An der Verbindungsstelle bzw. für den Fall, dass mehrere Verbindungsstellen vorhanden sind ist dabei die mindestens eine Faservlieslage zumindest mit einer der mindestens zwei Lagen Scrim verbunden. Dadurch wird sichergestellt, dass im Betrieb des Filterbeutels eine permanente Fixierung der Stapelfasern und/oder Filamente der Faservlieslage mit der mindestens einen weiteren der mindestens zwei weiteren Lagen Scrim gewährleistet ist. Die übrigen Bereich bzw. übrigen Flächen machen somit minimal 80 % der durchströmbaren Oberfläche des Filterbeutel aus. Erfindungsgemäß ist nunmehr vorgesehen, dass der Bereich X bzw. die Bereiche in einem bzw. in den von einem durch die Einlassöffnung E in das Innere des Filterbeutels eintretenden Luftstrom unmittelbar angeströmten Bereich bzw. Bereichen angeordnet ist bzw. sind, der Pressflächenanteil der Verbindungsstellen in dem zuvor definierten Bereich bzw. den Bereichen, die maximal 20 % der durchströmbaren Oberfläche des Filterbeutels ausmacht bzw. ausmachen sowie ggf. zusätzlich in zusätzlichen Bereichen, die maximal 80 % der Fläche des Bereichs ausmachen, von 0,1 bis 40 % beträgt und größer ist als in den übrigen Flächen bzw. Bereichen.

In den übrigen Flächen können die einzelnen Filtermateriallagen des Filterbeutels auch komplett unverbunden sein.

Gemäß der vorliegenden Erfindung ist somit vorgesehen, lediglich in einem Bereich des Staubsaugerbeutels die Faservlieslage mit mindestens einer weiteren Materiallage durch Verbindungen zu stabilisieren, wobei in diesem Bereich eine erhöhte Dichte der Verbindungen gewählt wird, sodass der Pressflächenanteil der Verbindungsstellen in diesem Bereich sowie ggf. zusätzlichen, den Bereich umgebenden Bereichen, erhöht ist.

Gemäß der Erfinung wird der Bereich bzw. die Bereiche dort lokalisiert, wo ein durch die Einlassöffnung in das Innere des Filterbeutels eintretender Luftstrom unmittelbar auf das Filtermaterial auftritt, was somit einen unmittelbar angeströmten Bereich bzw. Bereich darstellt.

Der vorliegenden Erfindung liegt somit die Erkenntnis zugrunde, dass mindestens dreilagige Filtermaterialien, die mindestens eine Lage Faservlies enthalten, exzellente Staubspeicherkapazität aufweisen, jedoch aufgrund der losen Fasern, die in der Faservlieslage enthalten sind, eine verringerte mechanische Stabilität aufweisen. Insbesondere in dem Bereich, in dem ein unmittelbares Auftreffen des Luftstromes bzw. der mit dem Luftstrom transportierten Staubpartikel erfolgt, kann im Laufe des Staubsaugerbetriebs eine mechanische Schädigung, insbesondere dieser Faservlieslage erfolgen, indem durch das Filtermaterial hindurchtretenden Luftstrom die losen Fasern der Faservlieslage verschoben oder weggeblasen werden. Dies führt zu den oben genannten Problemen, wodurch sich die Standzeit und die Abscheideleistung des Staubsauerfilterbeutels verschlechtert.

Maßgeblich beim Filterbeutel gemäß der vorliegenden Erfindung ist nunmehr, dass zumindest die Faservlieslage, d.h. die Filterlage des Staubsaugerfilterbeutels, bei der lose und unverbundene Stapelfasern bzw. Filamente vorhanden sind, mit mindestens einer der weiteren Lagen verbunden ist, so dass eine permanente Fixierung der Stapelfasern bzw. der Filamente der Faservlieslage mit mindestens einer der weiteren Lagen gewährleistet ist. Diese Verbindung ist dabei bevorzugt zumindest in dem Bereich bzw. der Fläche des Filtermaterials ausgebildet, in dem eine unmittelbare Anströmung mit dem in den Filterbeutel eintretenden Luftstrom erfolgt, d.h. in einem Bereich, in dem der in den Staubsaugerfilterbeutel eintretende Luftstrom direkt und quasi ungebremst auf das Filtermaterial auftrifft. Dieser Bereich des Staubsaugerfilterbeutels stellt den Bereich der höchsten mechanischen Beanspruchung dar.

Überraschenderweise wurde gefunden, dass es bei Filterbeuteln mit einer losen Faserlage (Faservlieslage), zur mechanischen Stabilisierung des Staubsaugerfilterbeutels völlig ausreichend ist, z.B. lediglich die am stärksten gefährdeten Bereiche durch Verbindungsstellen, beispielsweise Verschweißungen zu stabilisieren. Dadurch wird eine effektive mechanische Fixierung der losen Fasern erreicht, so dass diese von dem eintretenden Luftstrom nicht mehr verschoben werden können und auch bei stärkerer mechanischer Beanspruchung durch den Luftstrom am vorgesehenen Ort bleiben. Dadurch wird ein Staubsaugerfilterbeutel realisiert, der eine exzellente Standzeit bei gleichzeitig sehr hohem Staubspeichervermögen aufweist. Gleichzeitig kann somit auf die aus dem Stand der Technik bekannten Prallschutzeinrichtungen verzichtet werden, so dass ebenso die Problematik des hohen Druckverlustes im Staubsaugerfilterbeutel vermieden werden kann. Durch das Weglassen der Prallschutzeinrichtungen ist die Herstellung des Staubsaugerbeutels ebenso vereinfacht und kostengünstiger.

Bevorzugt wird bzw. werden daher zunächst der Bereich bzw. bei Vorhandensein mehrerer Bereiche, die Bereiche bestimmt, in dem bzw. in denen der Luftstrom unmittelbar auftrifft und in denen somit mechanische Schädigungen auftreten können. In diesen Bereichen erfolgt erfindungsgemäß eine Fixierung der losen Fasern durch Verbindungsstellen, bei denen die losen Fasern der Faservlieslage mit mindestens einer der weiteren Lagen verbunden werden. Hierdurch wird der mechanischen Schädigung durch Luftstrom vorgebeugt.

Das Verfahren zur Bestimmung des unmittelbar angeströmten Bereichs bzw. bei Vorhandensein mehrerer unmittelbar angeströmter Bereiche ist weiter unten stehend im Detail beschrieben und entspricht ebenso einem erfindungsgemäßen Konzept.

Gemäß der vorliegenden Erfindung ist nunmehr vorgesehen, dass in dem oben definierten Bereich bzw. den Bereichen, insbesondere in den unmittelbar angeströmten Bereichen bzw. Flächen des Staubsaugerfilterbeutels eine höhere Dichte von Verbindungsstellen vorgesehen ist, als in den übrigen Bereichen des Staubsaugerfilterbeutels, d.h. der Pressflächenanteil (dies ist der Anteil, den die Fläche der Verbindungsstellen, bezogen auf die unmittelbar angeströmte Fläche ausmacht) ist höher als in den übrigen Bereichen des Staubsaugerfilterbeutels. Es wurde erfindungsgemäß erkannt, dass der Pressflächenanteil in diesem Bereich, bevorzugt in der unmittelbar angeströmten Fläche bzw. in den unmittelbar angeströmten Flächen von 0,1 bis 40 % ausreichend ist, um eine mechanische Schädigung der Faservlieslage vollständig zu unterbinden.

Eine weitere Verbesserung und Erhöhung der mechanischen Stabilität kann dadurch erreicht werden, dass nicht nur in diesem Bereich, z.B. im unmittelbar angeströmten Bereich bzw. den unmittelbar angeströmten Bereichen Verbindungsstellen vorgesehen werden, sondern auch in Bereichen, die unmittelbar an diesen Bereich und diesen umgeben.

In einer bevorzugten Ausführungsform beträgt der Pressflächenanteil der einen oder der mehreren Verbindungsstellen im eingangs definierten Bereich, bzw. den Bereichen, insbesondere im unmittelbar angeströmten Bereich bzw. in jeder der unmittelbar angeströmten Bereiche sowie ggf. dem zusätzlichen Bereich bzw. den zusätzlichen Bereichen von 0,25 bis 20 %, besonders bevorzugt von 0,5 bis 10 %.

Bevorzugt beträgt die Fläche des zusätzlichen Bereichs, der sich an den oben definierten Bereich bzw. die Bereiche anschließt 10 bis 80 % weiter bevorzugt 20 bis 70 %, besonders bevorzugt 30 bis 60 % der Fläche des eingangs definierten Bereichs.

Der zusätzliche Bereich ist dabei vorteilhafterweise konzentrisch um den oben definierten Bereich, z.B. den unmittelbar angeströmten Bereich angeordnet und kann z. B. kreisförmig oder ovalförmig ausgebildet sein oder der geometrischen Form der unmittelbar angeströmten Bereichs nachempfunden sein.

Gemäß einer weiteren bevorzugten Ausführungsform ist in den übrigen Flächen die mindestens eine Faservlieslage mit mindestens einer der mindestens zwei weiteren Lagen Scrim verbunden, mit der Maßgabe, dass, bezogen auf die gesamte durchströmbare Fläche des Filterbeutels in den übrigen Flächen der Pressflächenanteil der einen oder der Summe der mehreren Verbindungstellen maximal 5 % der durchströmbaren Fläche des Filterbeutels in den übrigen Flächen beträgt und durchschnittlich maximal 10 Verbindungsstellen pro 10 cm² vorhanden sind.

Das Filtermaterial des Staubsaugers kann damit auf analoge Weise gebildet sein, wie es den Patentanmeldungen EP 1795 247 und EP 1 960 084 zugrundeliegt. Hinsichtlich des Filtermaterials, das für den Filterbeutel gemäß der vorliegenden Erfindung eingesetzt werden kann, wird insbesondere auf diese beiden zuvor beschriebenen europäischen Patentanmeldungen verwiesen. Insbesondere hinsichtlich der stofflichen Definition eines Scrims bzw. einer Faservlieslage wird dabei auf die EP 1 795 247 A1 Bezug genommen. Sämtliche Definitionen hinsichtlich der verwendeten Begrifflichkeiten "Vliesstofflage", "Faservlieslage", "Stapelfaser" sowie "Filamente" werden in identischer Art und Weise bei der Definition der vorliegenden Erfindung verwendet, wie sie auch der EP 1 795 247 A1 zugrunde liegen.

In Ergänzung zu den Ausführungen des Standes der Technik, d.h. der EP 1795 247 und der EP 1 960 084 kann es bei der vorliegenden Erfindung ebenso gegeben sein, dass die einzelnen Filtermateriallagen - mit Ausnahme des eingangs definierten Bereichs bzw. Bereiche - unverbunden sind, d.h. beispielsweise nicht durch Schweißpunkte verbunden sind, so dass zwischen den einzelnen Filtermateriallagen keine Schweißverbindung gegeben ist, d.h. es ist alternativ ebenso möglich, dass in den übrigen Flächen die mindestens eine Faservlieslage mit den weiteren Lagen Scrim unverbunden ist.

Gemäß einer vorteilhaften Ausführungsform ist in eingangs definiertem Bereich bzw. den Bereichen, insbesondere im unmittelbar angeströmten Bereich bzw. in den unmittelbar angeströmten Bereiche sowie ggf. dem zusätzlichen Bereich bzw. den zusätzlichen Bereichen die eine oder der mehrere Verbindungsstellen balkenförmig, kreuzförmig, sternchenförmig, punktförmig, oder linienförmig und/oder kreisförmig ausgebildet.

Gemäß einer besonders bevorzugten Ausführungsform sind in eingangs definiertem Bereich bzw. den Bereichen, insbesondere im unmittelbar angeströmten Bereich bzw. in den unmittelbar angeströmten Bereichen sowie ggf. dem zusätzlichen Bereich bzw. den zusätzlichen Bereichen mehrere punktoder balkenförmige Verbindungsstellen vorhanden, die auf mehreren konzentrischen Kreisen angeordnet sind.

In den übrigen Flächen des Filterbeutels gemäß der vorliegenden Erfindung ist es bevorzugt, wenn durchschnittlich maximal 5, bevorzugt maximal 2, weiter bevorzugt maximal 1, weiter bevorzugt maximal 0,8, weiter bevorzugt maximal 0,6, insbesondere maximal 0,3 Verbindungen pro 10 cm² vorhanden sind und/oder der Pressflächenanteil der Verbindungen in den übrigen Flächen maximal 2 %, bevorzugt maximal 1 % der Oberfläche der durchströmbaren Fläche des Filterbeutels in den übrigen Flächen beträgt.

Vorteilhaft ist dabei, dass das Scrim ein Flächengewicht von 3 bis 50 g/m² aufweist.

Unter einem Scrim wird gemäß der vorliegenden Erfindung insbesondere ein Netting, insbesondere ein gewebtes, extrudiertes oder fibrilisiertes Netting, eine gelochte Folie, schweißbares Papier, insbesondere Teebeutelpapier, sowie jede Art von Vliesstoff, insbesondere nassgelegtem, trockengelegtem oder extrudiertem Vliesstoff verstanden.

Gemäß der vorliegenden Erfindung ist es unnötig, dass der Filterbeutel in eingangs definiertem Bereich bzw. den Bereichen, insbesondere im unmittelbar angeströmten Bereich bzw. Bereichen sowie ggf. im zusätzlichen Bereich bzw. in den zusätzlichen Bereichen eine Prallschutzeinrichtungen und/oder Verstärkungseinlagen aufweist. Gemäß der vorliegenden Erfindung kann somit auf die zuvor genannte Prallschutzeinrichtung vollständig verzichtet werden. Hierdurch wird insbesondere ein hoher Druckverlust an den jeweiligen Prallschutzeinrichtungen vermieden.

Die Verbindungsstellen sowohl in den zusätzlichen Bereichen, als auch in den übrigen Flächen (sofern vorhanden), können insbesondere durch Schweißverbindungen, bevorzugt Ultraschallschweißverbindungen oder thermische Schweißverbindungen, oder durch Klebeverbindungen, oder durch Vernadelung zumindest der Faservlieslage und mindestens einer Scrimlage erfolgen.

Insbesondere ist es dabei vorteilhaft, wenn die Faservlieslage zwischen zwei Scrimlagen eingebetten ist und sämtliche dieser drei Lagen an den Verbindungsstellen miteinander verbunden sind. Dies kann zum Beispiel auf vorteilhafte Weise mittels einer Ultraschallschweißverbindung, z. B. durch Ultraschallkalandrieren verwirklicht werden. Diese Verbindungstechnik kann sowohl in der/den unmittelbar angeströmten Fläche/Flächen, in den zusätzlichen Bereichen als auch in den übrigen Bereichen des Filterbeutels angewandt werden.

Die zuvor genannten bevorzugten Ausführungsformen zur Beschaffenheit und Herstellung der Verbindungsstellen treffen für sämtliche Verbindungsstellen zu, die im erfindungsgemäßen Staubsaugerfilterbeutel realisiert sind, d.h. für sämtliche Verbindungsstellen, die in der bzw. den unmittelbar angeströmten Flächen, den zusätzlichen verbundenen Bereichen, die um die unmittelbar angeströmten Flächen angeordnet sind, aber auch in den übrigen Bereichen des Staubsaugerfilterbeutels auftreten können.

Weiter vorteilhaft umfasst das Filtermaterial z.B. abströmseitig mindestens eine weitere Filtermateriallage, z.B. eine Meltblownlage und/oder eine Spinnvlieslage. Vorzugsweise sind an den Verbindungsstellen sämtliche Filtermateriallagen miteinander verbunden.

Weiterhin ist es möglich, dass die Einlassöffnung über eine Ablenkvorrichtung verfügen kann, über die die Strömungsrichtung das in das Innere des Filterbeutel eintretenden Luftstroms geändert wird. Mit einer derartigen Ablenkvorrichtung ist beispielsweise eine Änderung der Strömungsrichtung in das Innere des Filterbeutels um mehrere 10°, beispielsweise bis zu 90° möglich. Ebenso ist es möglich, dass an der Einlassöffnung eine Verschlussklappe angebracht ist. Die zuvor genannten Vorrichtungen können die Lage des unmittelbar angeströmten Bereiches beeinflussen. Für den Fall, dass eine Ablenkvorrichtung an der Einlassöffnung angebracht ist, wird somit die Richtung des in den Staubsaugerfilterbeutel eintretenden Luftstromes abgeändert. In diesem Fall liegt der unmittelbar angeströmte Bereich innerhalb des Staubsaugerfilterbeutels selbstverständlich an der Stelle, an der der abgelenkte Luftstrom auf die Innenwandung des Staubsaugerfilterbeutels auftrifft. Somit ist die Verbindung der mindestens zwei Materiallagen des Filtermaterials an der entsprechenden Stelle zu wählen.

Zusätzlich oder alternativ zu den zuvor genannten Ausführungsformen ist es ebenso möglich, dass der Filterbeutel mindestens einen Strömungsteiler umfasst, der den durch die Einlassöffnung in das Innere des Filterbeutel eintretenden Luftstrom in mindestens zwei Teilströme mit verschiedener Hauptströmungsrichtung unterteilt. Für den Fall, dass ein Strömungsteiler vorhanden ist, kann es gegeben sein, dass mehrere unmittelbar angeströmte Bereiche resultieren, die von jeweils einer Teilströmung - resultierend durch den Strömungsteiler- angeströmt werden. In diesem Fall ist es bevorzugt, wenn jedem Teilstrom ein unmittelbar angeströmter Bereich zugeordnet wird und eine entsprechende Verbindung, d.h. eine oder mehrere Verbindungsstellen an den ermittelten Stellen, d.h. den unmittelbar angeströmten Bereichen vorhanden ist. Somit weist das Filtermaterial in jedem unmittelbar angeströmten Bereich eines jeweiligen Teilstroms sowie ggf. zusätzlich in einem Bereich, der den jeweiligen unmittelbar angeströmten Bereich umgibt, eine oder mehrere Verbindungsstellen auf.

Ebenso kann es jedoch möglich sein, dass entsprechende Vorrichtung, wie zuvor genannt, beispielsweise Umlenkvorrichtungen bzw. Strömungsteiler am Stutzen des Staubsaugers selbst eingebracht sind, wobei der Stutzen dann über die Einlassöffnungen in den Staubsaugerfilterbeutel eingebracht wird. Das weiter unten stehende erfindungsgemäße Verfahren zur Bestimmung der unmittelbar angeströmten Bereiche in einem Staubsauerfilterbeutel ermöglicht es ebenso, bei entsprechend ausgestalteten Staubsaugerstutzen, mit denen die Luft in den Staubsauerfilterbeutel eingeblasen wird, diejenigen Flächen bzw. Bereiche zu ermitteln, die unmittelbar von den jeweiligen Luftströmen angeströmt werden.

Gemäß einer besonders bevorzugten Ausführungsform kann beispielsweise vorgesehen sein, dass der Filterbeutel als Flachbeutel oder als Seitenfaltenflachbeutel ausgeführt ist. Im Falle eines Flachbeutels werden zwei z. B. rechteckige Filtermateriallagen (mit jeweils insgesamt mindestens drei z.B. fünf Lagen) aufeinandergelegt und an den Rändern miteinander verbunden, beispielsweise miteinander verschweißt. Die beiden Filtermateriallagen repräsentieren dabei jeweils eine Seite des Filterbeutels. Bei einem Seitenfaltenbeutel wird die Filterbeutel ebenso durch zwei miteinander verbundene Filtermateriallagen gebildet, allerdings sind die beiden Filtermateriallagen auf zwei gegenüberliegenden Seiten eingeschlagen, wodurch sich eine innenliegende Falte ausbildet, die im Betriebszustand ausgestülpt werden kann. Die erste Filtermateriallage weist dabei eine Einlassöffnung auf. Die zweite Filtermateriallage weist z.B. der Einlassöffnung gegenüberliegend einen Bereich auf, der bevorzugt den unmittelbar angeströmten Bereich darstellt. Hier sind mehrere Verbindungsstellen ausgebildet, in denen die Materiallagen des Filtermaterials miteinander verschweißt sind. Dieser Bereich weist eine Fläche auf, die maximal 20 % der gesamten durchströmbaren Fläche des Filterbeutels ausmacht. Der Pressflächenanteil der Schweißstellen ist dabei in diesem Bereich höher als in den übrigen Bereichen des Filtermaterials.

Jedoch sind auch weitere geometrische Ausführungsformen des Filterbeutels denkbar und ebenso bevorzugt. Für den Fall, dass der Staubsaugerfilterbeutel beispielsweise als Klotzboden- bzw. Blockbodenbeutel ausgebildet sein kann, kann vorgesehen sein, dass der Filterbeutel einen rechteckigen Querschnitt aufweist, der Filterbeutel somit vier Wandungen aufweist, die aus dem entsprechenden Filtermaterial gebildet sind. In einem derartigen Fall kann es beispielsweise vorgesehen sein, dass vom Staubsauger selbst der Luftstrom mittels eines Stutzens in den Staubsaugerfilterbeutel eingeblasen wird, dieser Stutzen kann ebenso eine Umlenkeinrichtung für den eingeblasenen Luftstrom aufweisen. In diesem Fall ist es bevorzugt, wenn zumindest auf der Seite, auf die z.B. aufgrund der Umlenkeinrichtung der Luftstrom unmittelbar auftritt (d. h. auf der eine unmittelbar angeströmte Fläche vorhanden ist) eine entsprechende Verbindung der einzelnen Materiallagen des Filtermaterials wie voranstehend definiert vorhanden ist. Filterbeutel aus Vliesstoffen, die Formen aufweisen, die den klassischen Block- oder Klotzbodenbeuteln aus Filterpapier entsprechen sind beispielsweise aus der DE 20 2009 004 433 U1 und der DE 20 2005 016 309 U1 bekannt. Ebenso ist eine plissierte Form des Filterbeutels denkbar, derartige Filterbeutel sind z. B. in der EP 2 366 319 definiert. Der Offenbarungsgehalt dieser Anmeldung gilt ebenso für die voranstehend genannten plissierten Filterbeutel. Diese Verbindung kann beispielsweise auch auf mehreren oder allen der Seiten des Staubsaugerfilterbeutels vorhanden sein.

Wie voranstehend beispielhaft gezeigt, ist die Lage des unmittelbar angeströmten Bereichs bzw. der unmittelbar angeströmten Bereiche von der jeweiligen Geometrie eines Staubsaugerfilterbeutels sowie gegebenenfalls vorhandenen Strömungsteilern bzw. Ablenkvorrichtungen für Strömungen ab, wobei beispielsweise Ablenkvorrichtungen auch an den entsprechenden Staubsaugern bzw. Stutzen, die in den Filterbeutel eingeführt werden und somit nicht am Staubsaugerfilterbeutel angebracht sein können. Die Wahl des verbundenen Bereichs bzw. die Lage des bzw. der unmittelbar angeströmten Bereiche muss somit für jeden Staubsaugerfilterbeuteltyp separat ermittelt und festgelegt werden.

Vorzugsweise weisen die Stapelfasern der Faservlieslage eine Länge zwischen 30 und 250 mm, bevorzugt zwischen 50 bis 150 mm, auf.

Beispielshafte Stapelfasern sind dabei ausgewählt aus der Gruppe bestehend aus Splitfasern, elektrostatisch geladenen Stapelfasern, Naturfasern, Chemiefasern und/oder Crimpfasern, wobei die Crimpfasern bevorzugt unterschiedliche räumliche Strukturen aufweisen, bevorzugt vom Zickzack, Wellen und/oder Spiraltyp und/oder ausgewählt sind aus der Gruppe bestehend aus mechanisch gecrimpten Fasern, Autocrimpfasern und/oder Bikomponentenfasern.

Vorzugsweise beträgt die flächenbezogene Masse der mindestens einen Faservlieslage zwischen 10 und 200 g/m², insbesondere zwischen 20 bis 100 g/m².

Alternativ oder zusätzlich hierzu kann die flächenbezogene Masse des Scrims mindestens 3 g/m² betragen.

Insbesondere umfasst das Filtermaterial mindestens drei Filtermateriallagen, wobei eine Faservlieslage zwischen zwei Scrimlagen angeordnet ist.

Gegebenenfalls ist es möglich, dass das Filtermaterial mindestens vier, bevorzugt mindestens fünf Filtermateriallagen umfasst, wobei zusätzlich zu den drei vorgenannten Filtermateriallagen mindestens eine weitere Filtermateriallage, ausgewählt aus der Gruppe bestehend aus Feinfilterlagen, Papier, Vliesmaterial und/oder Nanofasern umfasst ist. Diese weitere Filtermateriallage ist dabei bevorzugt abströmseitig am Filterbeutel angeordnet.

An der Einlassöffnung kann beispielsweise ebenso eine entsprechende Halteplatte für einen jeweiligen Staubsaugertyp angebracht sein. Besonders bevorzugte Halteplatten, die sich für die Zwecke der vorliegenden Erfindung eignen, sind z. B. in der europäischen Patentanmeldung mit der Anmeldenummer 11 010 202 genannt. Bezüglich möglicher Ausgestaltungen bevorzugter Halteplatten für die vorliegende Erfindung wird auf diese Patentanmeldung Bezug genommen.

Wie aus den voranstehenden Ausführungsformen ersichtlich ist, ist es insbesondere notwendig, eine möglichst genaue Bestimmung der Lage des unmittelbar angeströmten Bereiches zu ermöglichen, um dort eine zuverlässige Verbindung der einzelnen Materiallagen des Filtermaterials anbringen zu können. Dabei hängt die Lage des unmittelbar angeströmten Bereichs nicht nur von den geometrischen Begebenheiten des Staubsaugerfilterbeutels ab, sondern auch von gegebenenfalls vorhandenen Ablenkeinrichtungen, die einen eintretenden Luftstrom ins Innere des Staubsaugerfilterbeutels in seiner Richtung ablenkt bzw. Strömungsteilern, die beispielsweise einen eintretenden Luftstrom in mindestens zwei Teilströme unterteilen können. Ablenkeinrichtungen können gegebenenfalls auch an den entsprechenden Staubsaugern vorhanden sein, beispielsweise entsprechend ausgebildete Stutzen, die die Strömung nicht geradlinig durch die Einlassöffnung des Staubsaugerfilterbeutels ins Innere des Beutels einblasen.

Weitere Einflussfaktoren sind beispielsweise ebenso die Art des Filtermaterials, insbesondere des Faservlieses:
- Faservlies aus Stapelfaser
   o Grammatur der Faservlieslage
   o Länge der Stapelfaser
   o Durchmesser der Stapelfaser
   o Geometrie der Stapelfaser (gerade, mit crimp)
   o Material der Filamente
- Faservlies aus Filamenten
   o Grammatur der Faservlieslage
   o Durchmesser der Filamente
   o Geometrie der Filamente (gerade, mit crimp)
   o Material der Filamente

Ebenso spielt die Art und Weise, wie die Fläche angeströmt wird eine Rolle, die insbesondere abhängt von:
o Durchmesser des Stutzens
o Richtung der Einströmung (Bananenstutzen, Rückschlagklappen)
o Einströmende Luftmenge (Motorleistung)
o Beutelgeometrie
o Beutelfaltung / Beutelentfaltung
o Im Beutel vorhandene Strömungsverteiler (Aufteilen und oder Umlenken der Strömung)

Die vorliegende Erfindung gibt daher ebenso ein Verfahren zur Ermittlung des durch einen durch die Einlassöffnung in das Innere eines Filterbeutels für einen Staubsauger eintretenden Luftstrom unmittelbar angeströmten Bereichs bzw. Bereiche des Filterbeutels, bei dem ein Filterbeutel, umfassend ein Filtermaterial, das mindestens drei Filtermateriallagen umfasst, von denen mindestens eine Lage ein Scrim und mindestens eine Lage eine Faservlieslage, enthaltend Stapelfasern und/oder Filamente, ist, sowie eine im Beutel angebrachte Einlassöffnung, in einen für den Filterbeutel geeigneten Staubsauger eingesetzt und für 5 Minuten bei höchstmöglicher Leistungseinstellung des Staubsaugers Luft in den Filterbeutel über die Einlassöffnung eingesaugt wird.

Danach wird der Filterbeutel dem Staubsauger entnommen und die Innenseite des Filterbeutels wird begutachtet. Diejenigen Bereiche, die visuell erkennbare Schädigungen aufweisen, werden dabei als unmittelbar angeströmter Bereich, bzw. bei Vorhandensein mehrerer geschädigter Flächen als unmittelbar angeströmte Flächen definiert.

Bei dem erfindungsgemäßen Bestimmungsverfahren wird somit ein quasi identischer Filterbeutel für einen Staubsauger eingesetzt, wie er voranstehend erfindungsgemäß beschrieben ist, mit der Maßgabe, dass das Filtermaterial dieses Filterbeutels in der unmittelbar angeströmten Fläche bzw. bei Vorhandensein mehrerer Flächen bzw. den Flächen keine Verbindungsstellen aufweist. Das Filtermaterial dieses zu Testzwecken verwendeten Filterbeutels entspricht somit dem Filtermaterial des Staubsaugers wie erfindungsgemäß beschrieben in den übrigen Bereichen.

Mit diesem Filterbeutel wird das voranstehende Testverfahren durchgeführt, anschließend wird der Beutel geöffnet (z. B. durch Entfernen der umlaufenden Schweißnähte) und anhand der auftretenden Schädigungen auf die unmittelbar angeströmte Fläche bzw. Flächen geschlossen.

Eine Schädigung kann beispielsweise dann angenommen werden, wenn die Faservlieslage des Filtermaterials durch den eintretenden Luftstrom ausgedünnt bzw. Fasern an dieser Stelle aus der Faservlieslage durch den Luftstrom weggeblasen werden. Die Stellen der Schädigung entsprechen somit ausgedünnten bzw. verdickten Bereichen im Filtermaterial. Diese Bereiche können visuell ermittelt werden, oder beispielsweise dadurch bestimmt werden, dass die mittlere Dicke des Filtermaterials vor und nach Durchführung des Einsaugtests mit dem Staubsauger, wie voranstehend beschrieben, vermessen wird. An den Stellen, an denen eine Abweichung von der durchschnittlichen Dicke des Filtermaterials zu beobachten ist, ist ein geschädigter Bereich anzunehmen. Die Dicke des Filtermaterials kann dabei gemäß EN ISO 9073-2:1996 bestimmt werden.

Eine bevorzugte Ausführungsform hierzu sieht vor, dass bei dem zum erfindungsgemäßen Bestimmungsverfahren eingesetzten Filterbeutel die mindestens eine Faservlieslage mit mindestens einer der mindestens zwei weiteren Lagen Scrim verbunden ist, mit der Maßgabe, dass, bezogen auf die gesamte durchströmbare Fläche des Filterbeutels der Pressflächenanteil der einen oder der Summe der mehreren Verbindungstellen maximal 5 % der durchströmbare Fläche des Filterbeutels und durchschnittlich maximal 10 Verbindungsstellen pro 10 cm² vorhanden sind, oder die mindestens eine Faservlieslage mit den weiteren Lagen Scrim unverbunden ist.

Insbesondere ist es bevorzugt, wenn der Staubsauger (sofern vorhanden) ohne Schlauch betrieben wird, um Strömungsverluste zu minimieren um ein möglichst unverfälschtes Ergebnis zu erhalten.

Gemäß einer weiter bevorzugten Variante des Ermittlungsverfahrens können während der Betriebszeit des Staubsaugers auch geringe Mengen an Staub, Sand, Toner oder Kombinationen hieraus ins Innere des Staubsaugerfilterbeutels eingesaugt werden. Beispielhafte Mengen hierzu betragen ca. 5 bis 15 g, z.B. 10 bis 12 g. Insbesondere für den Fall, dass Toner oder eine Mischung aus Toner und Sand bzw. Toner und Staub eingetragen wird, wird die Visualisierung der dadurch erzielten Schädigungen in der unmittelbaren angeströmten Fläche verbessert.

Die aus den oben beschriebenen Ermittlungsverfahren gewonnen Kenntnisse können auch zur Herstellung eines erfindungsgemäßen Staubsaugerfilterbeutels verwendet werden. Hierzu wird zunächst für eine jeweilige geometrische Form des Staubsaugerfilterbeutels gemäß dem voranstehend beschriebenen Verfahren die Stelle bestimmt, an der die unmittelbar angeströmte Fläche bzw. bei Vorhandensein mehrerer unmittelbar angeströmten Flächen die unmittelbar angeströmten Flächen liegen. Zumindest in diesen Bereichen sowie ggf. zusätzlichen Bereichen wird dann zumindest eine bzw. mehrere Verbindungsstellen in die Filtermateriallage eines ansonsten geometrisch identischen Staubsaugerfilterbeutels eingebracht, um dort die losen Fasern der Faservlieslage mit mindestens einer weiteren Scrimlage permanent zu fixieren. Der Pressflächenanteil ist dabei gemäß den Angaben des Patentanspruchs 1 zu wählen.

Die vorliegende Erfindung wird anhand der nachfolgend beigefügten Figuren näher erläutert, ohne die Erfindung jedoch auf die speziell dargestellten Parameter zu beschränken. Dabei zeigen
Figur 1 einen Flachbeutel ohne Verbindungsstellen in der unmittelbar angeströmten Fläche nach Durchführung des Bestimmungsverfahren,
Figur 2 den prinzipiellen Aufbau des Filtermaterials, das dem Filterbeutel gemäß Figur 1 zugrunde liegt,
Figur 3 einen Flachfilterbeutel gemäß der vorliegenden Erfindung nach Durchführung des erfindungsgemäßen Testverfahrens,
Figur 4 ein Detail des Filterbeutels aus Figur 3,
Figur 5 verschiedene mögliche Geometrien für Verbindungsstellen in der unmittelbar angeströmten Fläche gemäß der vorliegenden Erfindung, sowie
Figur 6 einen Querschnitt durch ein erfindungsgemäßes Muster von Verbindungsstellen in der unmittelbar angeströmten Fläche.

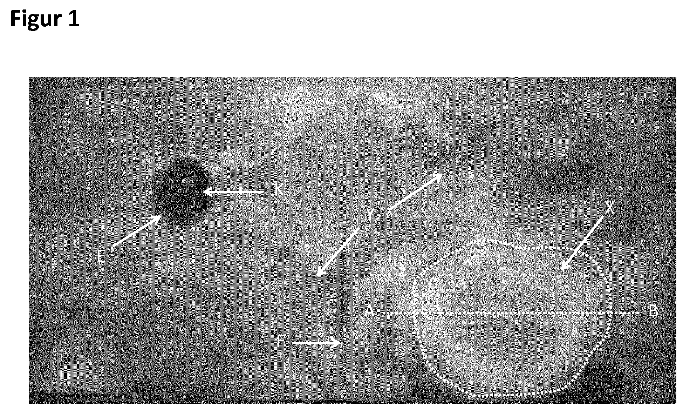

In Figur 1 ist ein Staubsaugerfilterbeutel dargestellt, mit dem das erfindungsgemäße Verfahren zur Ermittlung der unmittelbar angeströmten Fläche durchgeführt wurde. Der Staubsaugerfilterbeutel ist dabei ein Flachbeutel, der an seinen Rändern umliegend verschweißt ist. In Figur 1 ist der aufgeschnittene Staubsaugerfilterbeutel dargestellt, dabei wurde die ehemals an den Rändern vorhandene umlaufende Schweißnaht an drei Seiten abgeschnitten, es ist lediglich noch eine Schweißnaht (Falzlinie F) vorhanden. Die beiden in Figur links und rechts dargestellten Seiten stellen somit die Vorder- bzw. Rückseite des Filterbeutels dar. Die Vorderseite weist eine Einlassöffnung E mit einer Verschlusskappe K auf, über die der Einlassstutzen des Staubsaugers in den Staubsaugerfilterbeutel eingeführt werden kann. Die in Figur 1 dargestellte rechte Seite (rechts von der Faltlinie F) stellt somit die Rückseite des Staubsaugerfilterbeutels dar. In Figur 1 ist ein Blick auf die Innenseite des Staubsaugerfilterbeutel angegeben, d.h. auf die Anströmseite des Filtermaterials. Das Filtermaterial des in Figur 1 dargestellten Filterbeutels besteht dabei aus 5 Lagen Filtermaterial, nämlich von der Anstömseite zur Abströmseite hin gesehen aus einer Lage Scrim aus einem thermoplastischen Kunststoffmaterial, sowie einer Faservlieslage aus losen, unverbundenen Stapelfasern einer weiteren Lage Scrim, einer Meltblownlage und einer außen angeordneten Lage Spinnvlies. Mit Ausnahme der Bereiche der randseitige Schweißnähte (die in Figur 1 bis auf die noch vorhandene Falzlinie F entfernt wurden, sowie der Verschweißung der Verschlussklappe K an der Einlassöffnung E) sind die einzelnen Lagen des Filtermaterials dabei in der gesamten Fläche unverbunden. Mit diesem Staubsaugerfilterbeutel (in verschlossenem Zustand) wurde das Verfahren zur Bestimmung des unmittelbar angeströmten Bereichs X durchgeführt. Dabei wurde der Staubsaugerfilterbeutel in einen hierfür geeigneten Staubsauger eingesetzt und der Staubsauger für fünf Minuten bei höchster Leistungseinstellung betrieben. Zur besseren Visualisierung der Schädigungen am Filtermaterial wurden portionsweise ca. 10 g einer Mischung aus 10 g Mineralstaub (AC Finedust) mit 1 g Toner (schwarz) in den Staubsaugerfilterbeutel eingesaugt. Das Verfahren kann jedoch ebenso ohne das Einsaugen von Staub und/oder Toner durchgeführt werden. Anschließend wurde der Staubsaugerfilterbeutel aus dem Staubsauger entnommen und an drei Seiten die umlaufende Verschweißung entfernt, um die auftretenden Schädigungen zu begutachten. Erkennbar ist, dass in einem Bereich X die losen Fasern der Faservlieslage verschoben wurden. Der in dem Bereich X dargestellte dunklere innere kreisförmige Abschnitt stellt dabei eine Stelle dar, an der weniger lose Fasern vorhanden sind, diese wurden durch den durch die Einlassöffnung eintretenden Luftstrom konzentrisch zur Seite gedrückt und somit weggeblasen. Somit ist das Filtermaterial in Inneren des Bereichs X ausgedünnt, am Rand des Bereichs X wird es durch eine Wulst aus losen Fasern verdickt. Beide Formen stellen Schädigungen des Filtermaterials dar, die es zu vermeiden gilt. In den übrigen Bereichen Y, die außerhalb des Bereiches X liegen, konnte keine derartige Schädigung festgestellt werden. Zudem ist erkennbar, dass wider Erwarten der Bereich X, in dem Schädigungen auftreten, nicht direkt gegenüber der Einlassöffnung E liegt, sondern diesem etwa diagonal gegenüber liegt. Die unmittelbar angeströmte Fläche X, d.h. der Bereich, in dem visuell erkennbare Schädigungen durch den Luftstrom des Filtermaterials auftreten, wird als der Bereich X bestimmt, der den unmittelbar angeströmten Bereich bzw. die unmittelbar angeströmte Fläche darstellt. Wie aus Figur 1 ersichtlich ist, weist dieser Bereich für den Beispielfall des Flachbeutels eine unregelmäßige Kontur auf, die in erster Näherung eine ovale Form besitzt.

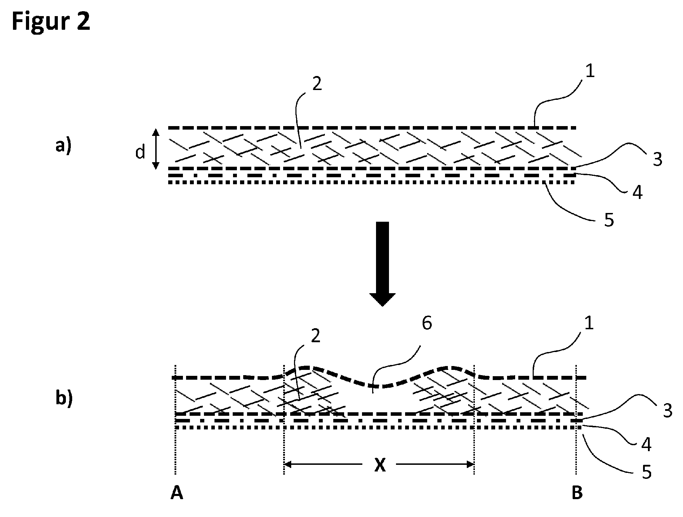

In Figur 2 ist ein schematischer Schnitt durch das Filtermaterial des in Figur 1 eingesetzten Staubsaugerfilterbeutels dargestellt, wobei Figur 2a) einen Schnitt durch das Filtermaterial vor dem erfindungsgemäßen Verfahren zur Bestimmung der unmittelbar angeströmten Fläche X und Figur 2b) einen Schnitt entlang der in Figur 1 dargestellten Linie A-B, also nach dem erfindungsgemäßen Verfahren darstellt. In Figur 2a) ist das unbeschädigte Filtermaterial dargestellt. Erkennbar ist, dass die Faservlieslage 2, die aus losen, unverbundenen Faser besteht, von zwei Lagen Scrim 1 und 3 eingeschlossen und somit fixiert wird. Anstelle der Scrimlagen 1 und 3 können jedoch auch andere Materialien, wie beispielsweise Vliesstoffe etc. verwendet werden. Ebenso ist es möglich, dass eine der Lagen 1 und 3 ein Netting darstellt, die andere eine Vliesstofflage etc. Zusätzlich ist abstromseitig eine Meltblownlage 4 sowie eine Lage Spinnvlies 5 angeordnet. Das Filtermaterial, d.h. die Summe der Schichten 1, 2 und 3 weist dabei eine spezifische mittlere Dicke d auf, die gemäß EN ISO 9073-2:1996, Verfahren B bestimmt werden kann. Zur Ermittlung der unmittelbar angeströmten Fläche X wird nunmehr das für Figur 1 vorgestellte Verfahren durchgeführt, bei dem für 5 Minuten bei höchster Leistungsstellung eines Staubsaugers Luft in den Staubsaugerfilterbeutel eingeblasen wird. In dem Bereich, in dem der Luftstrom unmittelbar, d.h. ungebremst auf den Bereich X auftritt, findet eine Verschiebung bzw. ein Wegblasen der losen, unverbundenen Fasern statt; die Fasern werden dabei zur Seite verschoben und sammeln sich im Randbereich der unmittelbar angeströmten Fläche X an und es bildet sich ein von Fasern freier Raum 6. In der Mitte des unmittelbar angeströmten Bereichs X kommt es dabei zu einer Ausdünnung der unverbundenen Faservlieslage, während in den Rändern dieses Bereichs eine vermehrte Ansammlung von losen Fasern stattfindet, d.h. eine Verdickung dieses Bereichs erfolgt. Beide Effekte sind jedoch für einen dauerhaften Betrieb des Staubsaugerfilterbeutels und somit für die Standzeit nachteilig: In der Mitte des Bereichs X tritt dabei eine vermehrte Durchlässigkeit für Staub auf, während in den Randbereichen der Fläche X durch die erhöhte Dicke d des Filtermaterials eine erhöhte Tendenz zu Verstopfungen des Filtermaterials gegeben ist. Die genaue Lage des unmittelbar angeströmten Bereichs X kann visuell ermittelt werden. Alternativ kann die Begrenzung des Bereichs X auch dadurch bestimmt werden, dass die Bereiche ermittelt werden, ab denen, ausgehend von den übrigen Bereichen Y eine Zunahme oder eine Abnahme der mittleren Schichtdicke d des Filtermaterials in den übrigen Bereichen zu verzeichnen ist. Hierzu kann erneut die oben angegebene Testnorm zur Bestimmung der Schichtdicke (EN ISO 9073-2:1996, Verfahren B) herangezogen werden.

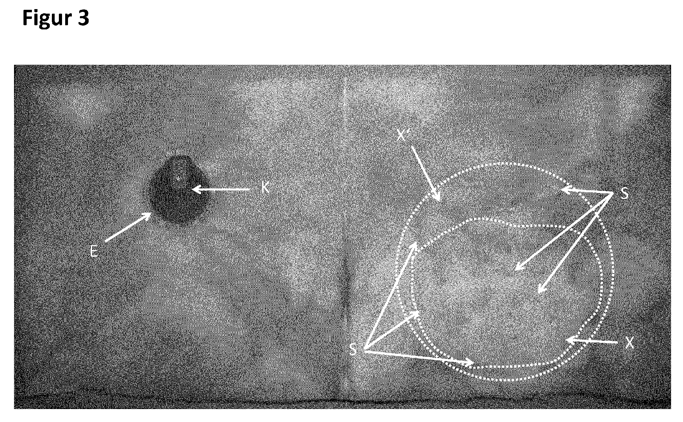

In Figur 3 ist ein erfindungsgemäßer Staubsaugerfilterbeutel dargestellt, der in der unmittelbar angeströmten Fläche X sowie in einer zusätzlichen Fläche X', die um die unmittelbar angeströmte Fläche X angeordnet ist, balkenförmige Schweißnähte S aufweist. Mit dem in Figur 3 dargestellten Staubsaugerfilterbeutel wurde ebenso das Testverfahren, das auch für den Staubsaugerfilterbeutel dargestellt wurde, durchgeführt. Auch dieser Staubsaugerfilterbeutel wurde in einen Staubsauger eingesetzt und für 5 Minuten bei höchster Leistungseinstellung des Staubsaugers Luft sowie zur verbesserten Sichtbarmachung eventueller auftretender Schädigungen ca. 10 g einer Mischung aus 10 g Mineralstaub (AC Finedust) mit 1 g Toner (schwarz) in den Staubsaugerfilterbeutel eingesaugt. Der in Figur 3 dargestellte Staubsaugerfilterbeutel ist aus demselben Filtermaterial wie der Staubsaugerfilterbeutel gemäß Figur 1 gebildet und weist die gleichen Dimensionen bzw. Abmessungen auf. Beim erfindungsgemäßen Staubsaugerfilterbeutel gemäß Figur 3 wurden im unmittelbar angeströmten Bereich X, wie für den Staubsaugerfilterbeutel in Figur 1 ermittelt, balkenförmige Schweißverbindungen eingebracht, in der sämtliche der fünf Lagen des Filtermaterials verbunden wurden. Diese Schweißverbindungen sind in Figur 3 als schwarze Striche erkennbar und mit dem Bezugszeichen S gekennzeichnet. Zusätzlich wurden Schweißverbindungen S in einem zusätzlichen Bereich X' eingebracht, der um den unmittelbar angeströmten Bereich X herum angeordnet ist. Erkennbar ist, dass alleinig durch diese Schweißverbindungen S im unmittelbar angeströmten Bereich X sowie ggf. einem zusätzlich um den unmittelbar angeströmten Bereich X angeordneten Bereich X' eingebrachte Schweißverbindungen S völlig ausreichend sind, um die Schädigungen, die durch das unmittelbare Auftreffen des Luft- bzw. Partikelstroms auf die unmittelbar angeströmte Fläche X auftreten (siehe Fig. 1), zu verhindern. Der Pressflächenanteil der Schweißverbindungen S beträgt dabei im Beispielsfall der Figur 3 ca. 0,7 % sowohl im unmittelbar angeströmten Bereich X und im zusätzlichen Bereich X'. In den übrigen Bereichen des Staubsaugerfilterbeutels sind (mit Ausnahme der umlaufenden Schweißverbindung bzw. der Schweißverbindung im Bereich der Einlassöffnung E zur Fixierung der Halteplatte K) keine weiteren Schweißverbindungen der einzelnen Lagen des Filtermaterials eingebracht. Gemäß der vorliegenden Erfindung kann somit die Anzahl der Schweißverbindungen bzw. deren Pressflächenanteil auf ein absolut notwendiges Minimum reduziert werden, was zu einer äußerst hohen Standzeit des Staubsaugerfilterbeutels führt.

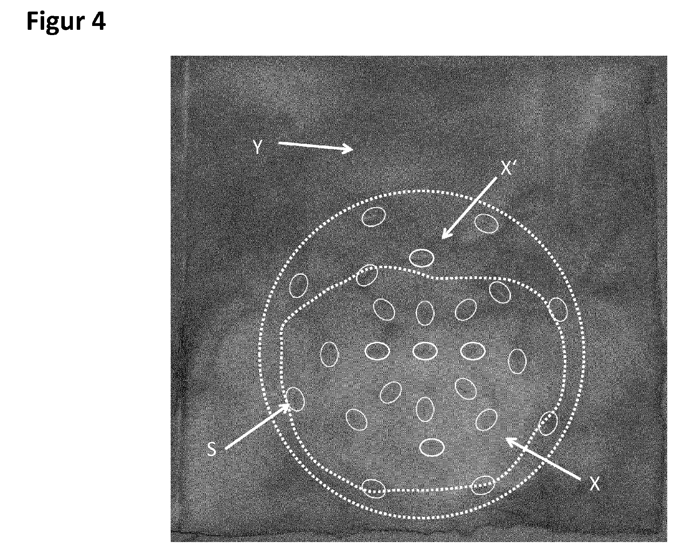

In Figur 4 ist eine vergrößerte Aufnahme der Rückseite des Staubsaugerfilterbeutels, wie aus Figur 3 dargestellt, gezeigt. Dargestellt sind die einzelnen vorhanden Schweißverbindungen S, die in Figur 4 durch die weißen ovalen Umrandungen sichtbar gemacht sind.

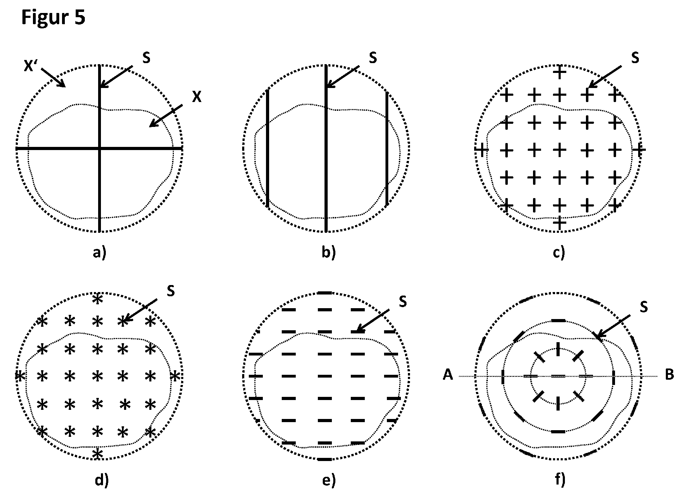

In Figur 5 sind verschiedene mögliche Schweißmuster dargestellt, die im unmittelbar angeströmten Bereich X bzw. in einem zusätzlichen Bereich X' um den unmittelbar angeströmten Bereich X eingebracht sein können. Wie in Figur 5a) dargestellt, kann eine mögliche Schweißverbindung beispielsweise als kreuzförmige Schweißverbindung S ausgebildet sein, die durch die unmittelbar angeströmte Fläche X und den zusätzlichen Bereich X' durchgängig ausgebildet ist. Ebenso können parallel geführte Schweißverbindungen S (siehe Figur 5b) möglich sein. Weiterhin möglich sind kreuzförmige Schweißverbindungen (Figur 5c), sternförmige Schweißverbindungen (Figur 5d) oder balkenförmige Schweißverbindungen (Figur 5e). Maßgeblich ist dabei lediglich, dass der Pressflächenanteil des Schweißmusters, d.h. die Fläche, die durch die Schweißnaht bzw. die Summe der Flächen der einzelnen Schweißnähte bezogen auf die Gesamtfläche des unmittelbar angeströmten Bereiches X und ggf. des zusätzlichen Bereichs X' innerhalb der Bemessungen, wie in Patentanspruch 1 definiert, liegt.

Eine besonders bevorzugte Ausführungsform eines Schweißmusters ist in Figur 5f) dargestellt. Dieses Schweißmuster liegt auch dem erfindungsgemäßen Staubsaugerfilterbeutel, wie er in Figur 3 bzw. 4 vorgestellt wurde, zugrunde. Die balkenförmigen Schweißnähte S liegen dabei auf konzentrischen Kreisen, zusätzlich ist eine balkenförmige Schweißnaht im Mittelpunkt der konzentrischen Kreise angeordnet.

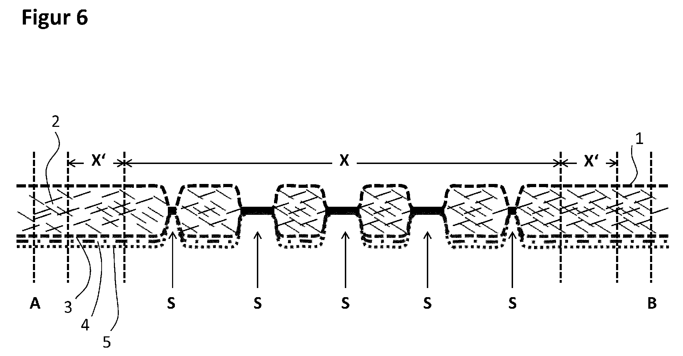

In Figur 6 ist ein Schnittbild entlang der Linie A-B der Figur 5f) dargestellt. Das Filtermaterial besteht dabei wieder aus den Scrimlagen 1 und 3 sowie der dazwischen angebrachten Faservlieslage 2 sowie der Meltblownlage 4 und der Spinnvlieslage 5. Im Bereich X sind dabei jeweils balkenförmige Schweißstellen S vorhanden, an denen sämtliche der Lagen des Filtermaterials 1 bis 5 verbunden sind. Die Schweißstellen werden dabei bevorzugt mittels eines Ultraschallschweißverfahrens eingebracht. Auch in den zusätzlichen Bereichen X' können Schweißstellen vorhanden sein (siehe Figur 5f), diese Schweißstellen S sind in Figur 6 jedoch anhand des gewählten Schnittes A-B nicht dargestellt. Die im Bereich der unmittelbar angeströmten Fläche X, sowie ggf. der zusätzlichen Fläche X' vorhandenen Schweißstellen S verleihen dem Filtermaterial dabei eine genügend hohe Eigenfestigkeit, sodass effektiv verhindert werden kann, dass im Betrieb des Staubsaugerfilterbeutels ein Verschieben der losen Fasern der Faservlieslage 2 stattfindet und somit Schädigungen (siehe auch Figur 1) effektiv unterbunden werden können.

## Patentansprüche

1. Filterbeutel für einen Staubsauger,
umfassend einen Beutel aus einem Filtermaterial, das mindestens drei Filtermateriallagen (1, 2, 3, 4, 5) umfasst, von denen mindestens eine Lage ein Scrim (1, 3) und mindestens eine Lage eine Faservlieslage (2), enthaltend Stapelfasern und/oder Filamente, ist,
sowie eine im Beutel angebrachte Einlassöffnung (E),
wobei das Filtermaterial des Filterbeutels in mindestens einem Bereich (X), der bzw. die maximal 20 % der durchströmbaren Oberfläche des Filterbeutels ausmacht bzw. ausmachen, sowie ggf. einem zusätzlichen Bereich (X') bzw. zusätzlichen Bereichen, der bzw. die den Bereich (X) bzw. jeweils einen Bereiche (X) unmittelbar umgeben, wobei der zusätzliche Bereich (X') bzw. die zusätzlichen Bereiche maximal 80 % der Fläche des Bereichs (X) bzw. jeweils des Bereichs (X) ausmacht bzw. ausmachen, eine oder mehrere Verbindungsstellen (S) aufweist, bei der die mindestens eine Faservlieslage (2) zumindest mit einer der mindestens zwei weiteren Lagen Scrim (1, 3) verbunden ist, so dass im Betrieb des Filterbeutels eine permanente Fixierung der Stapelfasern und/oder Filamente der Faservlieslage (2) mit der mindestens einen der mindestens zwei weiteren Lagen Scrim (1, 3) gewährleistet ist,
**dadurch gekennzeichnet,**
**dass**, der Bereich (X) bzw. die Bereiche in einem bzw: in den von einem durch die Einbassöffnung (E) in das Innere des Filterbeutels eintretenden Luftstrom unmittelbar angeströmten Bereich bzw. Bereichen angeordnet ist bzw. sind, und der Pressflächenanteil der einen oder der mehreren Verbindungsstellen (S) in diesem Bereich (X) bzw. in jedem dieser Bereiche sowie ggf. dem zusätzlichen Bereich (X') bzw. den zusätzlichen Bereichen von 0,1 und 40 % beträgt und größer ist als in den übrigen Flächen (Y).

2. Filterbeutel nach Anspruch 1, **dadurch gekennzeichnet, dass** der Pressflächenanteil der einen oder der mehreren Verbindungsstellen (S) in dem Bereich (X) bzw. in jedem der Bereiche sowie ggf. dem zusätzlichen Bereich (X') bzw. den zusätzlichen Bereichen von 0,25 und 20 %, besonders bevorzugt von 0,5 und 10 % beträgt.

3. Filterbeutel nach einem der vorhergehenden Ansprüche, **dadurch gekennzeichnet, dass** der zusätzliche Bereich (X') bzw. die zusätzlichen Bereiche 10 bis 80 %, bevorzugt 20 bis 70 %, besonders bevorzugt 30 bis 60 % der Fläche des Bereichs (X) bzw. jeweils der Bereiche ausmacht bzw. ausmachen.

4. Filterbeutel nach einem der vorhergehenden Ansprüche, **dadurch gekennzeichnet, dass** der zusätzliche Bereich (X') bzw. die zusätzlichen Bereiche kreisförmig oder ovalförmig ausgebildete sind oder der geometrischen Form des Bereichs (X) bzw. der Bereiche entspricht bzw. entsprechen.

5. Filterbeutel nach einem der vorhergehenden Ansprüche, **dadurch gekennzeichnet, dass** in den übrigen Flächen (Y) die mindestens eine Faservlieslage (2) mit mindestens einer der mindestens zwei weiteren Lagen Scrim (1, 3) verbunden ist, mit der Maßgabe, dass, bezogen auf die gesamte durchströmbare Fläche des Filterbeutels in den übrigen Flächen (Y) der Pressflächenanteil der einen oder der Summe der mehreren Verbindungstellen (S) maximal 5 % der durchströmbaren Fläche des Filterbeutels in den übrigen Flächen (Y) beträgt und durchschnittlich maximal 10 Verbindungsstellen (S) pro 10 cm² vorhanden sind, oder die mindestens eine Faservlieslage (2) mit den weiteren Lagen Scrim (1, 3) unverbunden ist.

6. Filterbeutel nach einem der vorhergehenden Ansprüche, **dadurch gekennzeichnet, dass** im Bereich (X) bzw. in den Bereichen sowie ggf. dem zusätzlichen Bereich (X') bzw. den zusätzlichen Bereichen die eine oder der mehrere Verbindungsstellen (S) balkenförmig, kreuzförmig, sternchenförmig, punktförmig, oder linienförmig und/oder kreisförmig ausgebildet ist.

7. Filterbeutel nach einem der vorhergehenden Ansprüche, dass im Bereich (X) bzw. in den Bereichen sowie ggf. dem zusätzlichen Bereich (X') bzw. den zusätzlichen Bereichen mehrere punkt- oder balkenförmige Verbindungsstellen (S) vorhanden sind, die auf mehreren konzentrischen Kreisen angeordnet sind.

8. Filterbeutel nach einem der vorhergehenden Ansprüche, **dadurch gekennzeichnet, dass** in den übrigen Flächen (Y) durchschnittlich maximal 5, bevorzugt maximal 2, weiter bevorzugt maximal 1, weiter bevorzugt maximal 0,8, weiter bevorzugt maximal 0,6, insbesondere maximal 0,3 Verbindungen pro 10 cm² vorhanden sind und/oder der Pressflächenanteil der Verbindungen in den übrigen Flächen (Y) maximal 2 %, bevorzugt maximal 1 % der Oberfläche der durchströmbaren Fläche des Filterbeutels in den übrigen Flächen (Y) beträgt.

9. Filterbeutel nach einem der vorhergehenden Ansprüche, **dadurch gekennzeichnet, dass** das Scrim (1, 3) ein Flächengewicht von 3 bis 50 g/m² aufweist.

10. Filterbeutel nach einem der vorhergehenden Ansprüche, **dadurch gekennzeichnet, dass** das Scrim (1, 3) ausgewählt ist aus der Gruppe bestehend aus Nettings, insbesondere gewebten, extrudierten oder fibrillierten Nettings, gelochten Folien, schweißbarem Papier sowie Vliesstoffen, insbesondere nass gelegten, trocken gelegten oder extrudierten Vliesstoffen.

11. Filterbeutel nach einem der vorhergehenden Ansprüche, **dadurch gekennzeichnet, dass** der Filterbeutel im Bereich (X) bzw. den Bereichen sowie ggf. zusätzlich in dem Bereich (X') bzw. in den zusätzlichen Bereichen keine Prallschutzeinrichtungen und/oder Verstärkungseinlagen aufweist.

12. Filterbeutel nach einem der vorhergehenden Ansprüche, **dadurch gekennzeichnet, dass** die Verbindungstelle bzw. die Verbindungsstellen (S) Schweißverbindungen, bevorzugt Ultraschallschweißverbindungen oder thermische Schweißverbindungen, oder Klebeverbindungen sind, oder durch Vernadelung der Faservlieslage (2) und mindestens einer Scrimlage (1, 3) hergestellt ist.

13. Filterbeutel nach einem der vorhergehenden Ansprüche, **dadurch gekennzeichnet, dass** das Filtermaterial abströmseitig mindestens eine weitere Materiallage, bevorzug mindestens eine Meltblownlage (4) und/oder eine Spinnvlieslage (5) umfasst.

14. Filterbeutel nach einem der vorhergehenden Ansprüche, **dadurch gekennzeichnet, dass** im Bereich der Verbindungsstelle oder der Verbindungsstellen (S) sämtliche der Lagen (1, 2, 3, 4, 5) des Filtermaterials verbunden sind.

15. Filterbeutel nach einem der vorhergehenden Ansprüche, **dadurch gekennzeichnet, dass** die Einlassöffnung (E) über eine Ablenkvorrichtung verfügt, über die die Strömungsrichtung des in das Innere des Filterbeutel eintretenden Luftstroms geändert wird und/oder eine Verschlussklappe (K) für die Einlassöffnung aufweist.

16. Filterbeutel nach einem der vorhergehenden Ansprüche, **dadurch gekennzeichnet, dass** der Filterbeutel mindestens einen Strömungsteiler umfasst, der den durch die Einlassöffnung in das Innere des Filterbeutel eintretenden Luftstrom in mindestens zwei Teilströme mit verschiedener Hauptströmungsrichtung unterteilt, wobei das Filtermaterial in jedem unmittelbar angeströmten Bereich (X) eines jeweiligen Teilstroms sowie ggf. zusätzlich in einem Bereich (X'), der den jeweiligen unmittelbar angeströmte Bereich (X) umgibt, eine oder mehrere Verbindungsstellen (S) aufweist.

17. Filterbeutel nach einem der vorhergehenden Ansprüche, **dadurch gekennzeichnet, dass** der Filterbeutel
a) als Flachfilterbeutel ausgestaltet ist, der durch zwei umlaufend an den Rändern verschweißte Materiallagen aus dem Filtermaterial gebildet ist, wobei die Einlassöffnung (E) in einer Materiallage angebracht ist, oder
b) als Seitenfilterbeutel ausgestaltet ist, oder
c) als Blockbodenbeutel ausgestaltet ist, bei dem die Einlassöffnung im Blockboden angebracht ist, oder
d) als plissierte Filterbeutel ausgestaltet ist.

18. Filterbeutel nach einem der vorhergehenden Ansprüche, **dadurch gekennzeichnet, dass** die Stapelfasern der Faservlieslage (2) eine Länge zwischen 30 und 250 mm, bevorzugt zwischen 50 bis 150 mm, besitzen.

19. Filterbeutel nach einem der vorhergehenden Ansprüche, **dadurch gekennzeichnet, dass** die Einlassöffnung eine Halteplatte aufweist.

20. Verfahren zur Ermittlung der durch einen durch die Einlassöffnung (E) in das Innere eines Filterbeutels für einen Staubsauger eintretenden Luftstrom unmittelbar angeströmten Bereichs (X) bzw. Bereiche des Filterbeutels, bei dem ein Filterbeutel, umfassend ein Filtermaterial, das mindestens drei Filtermateriallagen (1, 2, 3, 4, 5) umfasst, von denen mindestens eine Lage ein Scrim (1, 3) und mindestens eine Lage eine Faservlieslage (2), enthaltend Stapelfasern und/oder Filamente, ist,
sowie eine im Beutel angebrachte Einlassöffnung,
in einen für den Filterbeutel geeigneten Staubsauger eingesetzt und für 5 Minuten bei höchstmöglicher Leistungseinstellung des Staubsaugers Luft in den Filterbeutel über die Einlassöffnung eingesaugt wird,
und anschließend der oder die Bereiche, die eine visuell erkennbare Schädigung aufweisen, als unmittelbar angeströmter Bereich (X) bzw. unmittelbar angeströmte Bereiche definiert wird bzw. werden.

21. Verfahren nach vorhergehendem Anspruch, **dadurch gekennzeichnet, dass** die mindestens eine Faservlieslage (2) mit mindestens einer der mindestens zwei weiteren Lagen Scrim (1, 3) verbunden ist, mit der Maßgabe, dass, bezogen auf die gesamte durchströmbare Fläche des Filterbeutels der Pressflächenanteil der einen oder der Summe der mehreren Verbindungstellen (S) maximal 5 % der durchströmbare Fläche des Filterbeutels und durchschnittlich maximal 10 Verbindungsstellen (S) pro 10 cm² vorhanden sind, oder die mindestens eine Faservlieslage (2) mit den weiteren Lagen Scrim (1, 3) unverbunden ist.

## Claims

1. Filter bag for a vacuum cleaner,
comprising a bag made of a filter material which comprises at least three filter material layers (1, 2, 3, 4, 5), at least one layer of which is a scrim (1, 3) and at least one layer a fibre nonwoven fabric layer (2), comprising staple fibres and/or filaments,
and also an inlet opening (E) introduced in the bag,
the filter material of the filter bag in at least one region (X), which constitutes or constitute at most 20% of the throughflow surface of the filter bag, and also possibly in an additional region (X)' or additional regions which surrounds or surround the region (X) or respectively a region (X), the additional region (X') or the additional regions constituting at most 80% of the surface of the region (X) or respectively of the region (X), wherein the region (X) or the regions is or are disposed in one region or the regions subjected directly to a flow by an air flow entering through the inlet opening (E) into the interior of the filter bag having one or more joints (S), in the case of which the at least one fibre nonwoven fabric layer (2) is joined at least to one of the at least two further layers of scrim (1, 3) so that, during operation of the filter bag, a permanent fixing of the staple fibres and/or filaments of the fibre nonwoven fabric layer (2) to the at least one of the at least two further layers of scrim (1, 3) is ensured,
***characterised in that***
the proportion of pressed surface area of the one or more joints (S) in this region (X) or in each of these regions and also possibly in the additional region (X') or in the additional regions, is of 0.1 and 40% and is greater than in the remaining surfaces (Y).

2. Filter bag according to one of the preceding claims, **characterised in that** the proportion of pressed surface area of the one or more joints (S) in the region (X) or in each of the regions and also possibly in the additional region (X') or in the additional regions is of 0.25 and 20%, particularly preferably of 0.5 and 10%.

3. Filter bag according to one of the preceding claims, **characterised in that** the additional region (X') or the additional regions constitutes or constitute 10 to 80%, preferably 20 to 70%, particularly preferably 30 to 60%, of the surface area of region (X) or respectively of the regions.

4. Filter bag according to one of the preceding claims, **characterised in that** the additional region (X') or the additional regions have a circular or oval configuration or corresponds or correspond to the geometric shape of the region (X) or of the regions.

5. Filter bag according to one of the preceding claims, **characterised in that** the at least one fibre nonwoven fabric layer (2) is joined to at least one of the at least two further layers of scrim (1, 3) in the remaining surfaces (Y), with the proviso that, relative to the total throughflow surface of the filter bag in the remaining surfaces (Y), the proportion of pressed surface area of the one or of the sum of the plurality of joints (S) is at most 5% of the throughflow surface of the filter bag in the remaining surfaces (Y) and, on average, at most 10 joints (S) per 10 cm² are present, or the at least one fibre nonwoven fabric layer (2) is not joined to the further layers of scrim (1, 3).

6. Filter bag according to one of the preceding claims, **characterised in that**, in the region (X) or in the regions and also possibly in the additional region (X') or in the additional regions, the one or more joints (S) is configured to be bar-shaped, cruciate, starshaped, punctiform or linear and/or circular.

7. Filter bag according to one of the preceding claims, **characterised in that**, in region (X) or in the regions and also in the additional region (X') or in the additional regions, a plurality of punctiform or bar-shaped joints (S) is present, which are disposed on a plurality of concentric circles.

8. Filter bag according to one of the preceding claims, **characterised in that**, in the remaining surfaces (Y), on average at most 5, preferably at most 2, further preferably at most 1, further preferably at most 0.8, further preferably at most 0.6, in particular at most 0.3, joints per 10 cm² are present and/or the proportion of pressed surface area of the joints in the remaining surfaces (Y) is at most 2%, preferably at most 1%, of the surface of the throughflow surface of the filter bag in the remaining surfaces (Y).

9. Filter bag according to one of the preceding claims, **characterised in that** the scrim (1, 3) has a basis weight of 3 to 50 g/m².

10. Filter bag according to one of the preceding claims, **characterised in that** the scrim (1, 3) is selected from the group consisting of nettings, in particular woven, extruded or fibrillated nettings, perforated foils, weldable paper and also nonwoven fabrics, in particular wet-laid, dry-laid or extruded nonwoven fabrics.

11. Filter bag according to one of the preceding claims, **characterised in that** the filter bag in the region (X) or in the regions and also possibly in the region (X') or in the additional regions, has no impact-protection means and/or reinforcing inserts.

12. Filter bag according to one of the preceding claims, **characterised in that** the joint or the joints (S) are welded joints, preferably ultrasonic welded joints or thermal welded joints, or adhesive joints, or is produced by sewing together the fibre nonwoven fabric layer (2) and at least one scrim layer (1, 3).

13. Filter bag according to one of the preceding claims, **characterised in that** the filter material comprises, on the outflow side, at least one further material layer, preferably at least one meltbown layer (4) and/or one spun nonwoven fabric layer (5).

14. Filter bag according to one of the preceding claims, **characterised in that**, in the region of the joint or of the joints (S), all of the layers (1, 2, 3, 4, 5) of the filter material are joined.

15. Filter bag according to one of the preceding claims, **characterised in that** the inlet opening (E) has a deflection device via which the flow direction of the air flow entering into the interior of the filter bag is changed and/or has a sealing flap (K) for the inlet opening.

16. Filter bag according to one of the preceding claims, **characterised in that** the filter bag comprises at least one flow divider which subdivides the air flow entering through the inlet opening into the interior of the filter bag into at least two partial flows with a different main flow direction, the filter material, in each region (X) of a respective partial flow subjected directly to a flow and also possibly in addition in a region (X') which surrounds the respective region (X) subjected directly to a flow, has one or more joints (S).

17. Filter bag according to one of the preceding claims, **characterised in that** the filter bag
a) is configured as a flat filter bag which is formed by two material layers made of the filter material which are welded circumferentially at the edges, the inlet opening (E) being provided in one material layer, or
b) is configured as a side filter bag, or
c) is configured as block base bag in which the inlet opening is provided in the block base, or
d) is configured as a pleated filter bag.

18. Filter bag according to one of the preceding claims, **characterised in that** the staple fibres of the fibre nonwoven fabric layer (2) have a length between 30 and 250 mm, preferably between 50 to 150 mm.

19. Filter bag according to one of the preceding claims, **characterised in that** the inlet opening has a retaining plate.

20. Method for determining the region (X) or regions of the filter bag subjected directly to a flow by an air flow entering through the inlet opening (E) into the interior of a filter bag for a vacuum cleaner, in which a filter bag, comprising
a filter material which comprises at least three filter material layers (1, 2, 3, 4, 5), at least one layer of which is a scrim (1, 3) and at least one layer a fibre nonwoven fabric layer (2), comprising staple fibres and/or filaments,
and also an inlet opening introduced in the bag,
is inserted into a vacuum cleaner suitable for the filter bag and air is suctioned into the filter bag via the inlet opening for 5 minutes at the highest possible power setting of the vacuum cleaner,
and subsequently the region or regions which have visually detectable damage is or are defined as region (X) subjected directly to a flow or regions subjected directly to a flow.

21. Method according to the preceding claim, characterised that the at least one nonwoven fabric layer (2) is joined to at least one of the at least two further layers of scrim (1, 3), with the proviso that, relative to the total throughflow surface of the filter bag, the proportion of pressed surface area of the one or of the sum of the plurality of joints (S) is at most 5% of the throughflow surface of the filter bag and, on average, at most 10 joints (S) per 10 cm² are present, or the at least one fibre nonwoven fabric layer (2) is not joined to the further layers of scrim (1, 3).

## Revendications

1. Sac filtrant pour un aspirateur,
comprenant un sac en matériau filtrant qui comprend au moins trois couches de matériau filtrant (1, 2, 3, 4, 5) dont au moins une couche est un canevas (1, 3), et au moins une couche est une couche de voile non tissé (2) contenant des fibres discontinues et/ou des filaments,
ainsi qu'une ouverture d'entrée (E) mise en place dans le sac,
le matériau filtrant du sac filtrant dans au moins une zone (X) qui représente ou bien représentent au maximum 20 % de la surface du sac filtrant pouvant être parcourue par le flux, ainsi qu'éventuellement dans une zone (X') supplémentaire ou bien des zones supplémentaires qui entoure(nt) directement la zone (X) ou bien respectivement une zone (X), la zone (X') supplémentaire ou bien les zones supplémentaires représentant au maximum 80 % de la surface de la zone (X) ou bien respectivement la zone (X),
présentant un ou plusieurs emplacements de raccordement (S), dans lequel la couche de voile non tissé (2) au moins au nombre de un est raccordée au moins à une des au moins deux autres couches de canevas (1, 3) de telle sorte que, pendant le fonctionnement du sac filtrant, une fixation permanente des fibres discontinues et/ou des filaments de la couche de voile non tissé (2) avec la au moins une des au moins deux autres couches de canevas (1, 3) est garantie,
**caractérisé en ce que**
la zone (X) ou bien les zones est ou bien sont disposée(s) dans une zone ou bien dans les zones parcourue(s) directement par le flux d'air entrant à travers l'ouverture d'entrée (E) dans l'intérieur du sac filtrant, et
la fraction de surface de pression de l'un ou des plusieurs emplacements de raccordement (S) dans cette zone (X) ou bien dans chacune de ces zones ainsi qu'éventuellement dans la zone (X') supplémentaire ou bien dans les zones supplémentaires est égale à 0,1 et 40 % et est plus grande que dans les surfaces restantes (Y).

2. Sac filtrant selon la revendication 1, **caractérisé en ce que** la fraction de surface de pression de l'un ou des plusieurs emplacements de raccordement (S) dans cette zone (X) ou bien dans chacune des zones ainsi qu'éventuellement dans la zone (X') supplémentaire ou bien dans les zones supplémentaires est égale à 0,25 et 20 %, de préférence à 0, 5 et 10 %.

3. Sac filtrant selon l'une des revendications précédentes, **caractérisé en ce que** la zone (X') supplémentaire ou bien les zones supplémentaires représente ou bien représentent 10 à 80 %, de préférence de 20 à 70 %, de façon particulièrement préférée 30 à 60 % de la surface de la zone (X) ou bien de chacune des zones.

4. Sac filtrant selon l'une des revendications précédentes, **caractérisé en ce que** la zone (X') supplémentaire ou bien les zones supplémentaires sont constituées en forme de cercle ou en forme d'ovale ou correspond ou bien correspondent à la forme géométrique de la zone (X) ou bien des zones.

5. Sac filtrant selon l'une des revendications précédentes, **caractérisé en ce que**, dans les surfaces restantes (Y), la couche de voile non tissé (2) au moins au nombre de un est raccordée a au moins une des au moins deux autres couches de canevas (1, 3), avec la condition que, rapportée à la totalité de la surface du sac filtrant pouvant être parcourue par le flux dans les surfaces restantes (Y), la fraction de surface de pression de l'un ou de la somme des plusieurs emplacements de raccordement (S) est égale au maximum à 5 % de la surface du sac filtrant pouvant être parcourue par le flux dans les surfaces restantes (Y), et qu'il y ait en moyenne au maximum 10 emplacements de raccordement (S) par tranche de 10 cm², ou que la couche de voile non tissé (2) au moins au nombre de un ne soit pas raccordée aux autres couches de canevas (1, 3).

6. Sac filtrant selon l'une des revendications précédentes, **caractérisé en ce que**, dans la zone (X) ou bien dans les zones ainsi qu'éventuellement dans la zone (X') supplémentaire ou bien dans les zones supplémentaires, le ou les plusieurs emplacements de raccordement (S) est constitué en forme de barre, en forme de croix, en forme de petite étoile, en forme de point ou en forme de ligne et/ou en forme de cercle.

7. Sac filtrant selon l'une des revendications précédentes, **caractérisé en ce que**, dans la zone (X) ou bien dans les zones ainsi qu'éventuellement dans la zone (X') supplémentaire ou bien dans les zones supplémentaires, il y a plusieurs emplacements de raccordement (S) en forme de point ou en forme de barre qui sont disposés sur plusieurs cercles concentriques.

8. Sac filtrant selon l'une des revendications précédentes, **caractérisé en ce que**, dans les surfaces restantes (Y), il y a en moyenne au maximum 5, de préférence au maximum 2, plus préférablement au maximum 1, plus préférablement au maximum 0,8, plus préférablement au maximum 0,6, en particulier au maximum 0,3 raccordements par tranche de 10 cm², et/ou la fraction de surface de pression des raccordements dans les surfaces restantes (Y) est égale au maximum à 2 %, de préférence au maximum 1 % de la surface de la surface du sac filtrant pouvant être parcourue par le flux dans les surfaces restantes (Y).

9. Sac filtrant selon l'une des revendications précédentes, **caractérisé en ce que** le canevas (1, 3) présente un poids surfacique de 3 à 50 g/m².

10. Sac filtrant selon l'une des revendications précédentes, **caractérisé en ce que** le canevas (1, 3) est choisi dans le groupe composé de maillages, en particulier de maillages tissés, extrudés ou fibrillés, de feuilles perforées, de papier soudable ainsi que de non-tissés, en particulier de non-tissés posés sous forme humide, posés sous forme sèche ou extrudés.

11. Sac filtrant selon l'une des revendications précédentes, **caractérisé en ce que**, dans la zone (X) ou bien dans les zones ainsi qu'éventuellement en plus dans la zone (X') ou bien dans les zones supplémentaires, le sac filtrant ne présente pas dispositif antichocs et/ou de garnitures de renfort.

12. Sac filtrant selon l'une des revendications précédentes, **caractérisé en ce que** l'emplacement de raccordement ou bien les emplacements de raccordement (S) sont des raccordements soudés, de préférence des raccordements soudés par ultrasons ou des raccordements soudés thermiques, ou des raccordements collés, ou est réalisé par clouage de la couche de voile non tissé (2) et d'au moins une couche de canevas (1, 3).

13. Sac filtrant selon l'une des revendications précédentes, **caractérisé en ce que** le matériau filtrant comprend, côté aval, au moins une autre couche de matériau, de préférence au moins une couche par extrusion-soufflage (4) et/ou une couche filéeliée (5).

14. Sac filtrant selon l'une des revendications précédentes, **caractérisé en ce que**, dans la zone de l'emplacement de raccordement ou des emplacements de raccordement (S), toutes les couches (1, 2, 3, 4, 5) du matériau filtrant sont raccordées.

15. Sac filtrant selon l'une des revendications précédentes, **caractérisé en ce que** l'ouverture d'entrée (E) dispose d'un dispositif déflecteur par le biais duquel la direction d'écoulement du flux d'air entrant dans l'intérieur du sac filtrant est modifiée et/ou présente un volet de fermeture (K) pour l'ouverture d'entrée.

16. Sac filtrant selon l'une des revendications précédentes, **caractérisé en ce que** le sac filtrant comprend au moins un diviseur d'écoulement qui divise le flux d'air entrant dans l'intérieur du sac filtrant à travers l'ouverture d'entrée en au moins deux flux partiels avec une direction d'écoulement principale différente, le matériau filtrant présentant un ou plusieurs emplacements de raccordement (S) dans chaque zone (X) d'un flux partiel respectif parcourue directement par le flux ainsi qu'éventuellement en plus dans une zone (X') qui entoure la zone (X) respective parcourue directement par le flux.

17. Sac filtrant selon l'une des revendications précédentes, **caractérisé en ce que** le sac filtrant
a) est constitué en tant que sac filtrant plat qui est formé par deux couches de matériau réalisées en matériau filtrant soudées de façon périphérique sur les bords, l'ouverture d'entrée (E) étant mise en place dans une couche de matériau, ou
b) est constitué en tant que sac filtrant latéral, ou
c) est constitué en tant que sac à fond formant bloc dans lequel l'ouverture d'entrée est mise en place dans le fond formant bloc, ou
d) est constitué en tant que sac filtrant plissé.

18. Sac filtrant selon l'une des revendications précédentes, **caractérisé en ce que** les fibres discontinues de la couche de voile non tissé (2) possèdent une longueur entre 30 et 250 mm, de préférence entre 50 et 150 mm.

19. Sac filtrant selon l'une des revendications précédentes, **caractérisé en ce que** l'ouverture d'entrée présente une plaque de retenue.

20. Procédé de détermination de la zone (X) ou bien des zones du sac filtrant parcourues directement par le flux d'air entrant, à travers l'ouverture d'entrée (E), dans l'intérieur d'un sac filtrant pour un aspirateur, dans lequel un sac filtrant, comprenant
un matériau filtrant qui comprend au moins trois couches de matériau filtrant (1, 2, 3, 4, 5) dont au moins une couche est un canevas (1, 3), et au moins une couche est une couche de voile non tissé (2), contenant des fibres discontinues et/ou des filaments,
ainsi qu'une ouverture d'entrée mise en place dans le sac,
est introduit dans un aspirateur adapté pour le sac filtrant, et l'air est aspiré dans le sac filtrant par le biais de l'ouverture d'entrée pendant 5 minutes en présence d'un réglage de puissance de l'aspirateur le plus élevé possible,
et ensuite la ou les zones qui présentent un dommage visuellement détectable est ou bien sont définie(s) en tant que zone (X) parcourue directement par le flux ou en tant que zones parcourues directement par le flux.

21. Procédé selon la revendication précédente, **caractérisé en ce que** la couche de voile non tissé (2) au moins au nombre de un est raccordée à au moins une des au moins deux autres couches de canevas (1, 3), avec la condition que, rapportée à la totalité de la surface du sac filtrant pouvant être parcourue par le flux, la fraction de surface de pression de l'un ou de la somme des plusieurs emplacements de raccordement (S) est égale au maximum à 5 % de la surface du sac filtrant pouvant être parcourue par le flux, et qu'il y ait en moyenne au maximum 10 emplacements de raccordement (S) par tranche de 10 cm², ou que la couche de voile non tissé (2) au moins au nombre de un ne soit pas raccordée aux autres couches de canevas (1, 3).
